# EUROPÄISCHE PATENTANMELDUNG

(11) **EP 4 136 955 A1**
(43) Veröffentlichungstag der Anmeldung: **22.02.2023**
(21) Anmeldenummer: 22173938.6
(22) Anmeldetag: 18.05.2022
(51) Int. Cl.: A01D 41/12, B65D 88/12, B65D 88/00

(54) **SCHÜTTGUTBEHÄLTER FÜR EINE ERNTEMASCHINE**

(30) Priorität: 20.08.2021 DE 102021121647
(71) Anmelder: CLAAS Selbstfahrende Erntemaschinen GmbH, 33428 Harsewinkel (DE)
(72) Erfinder: Burbank, Martin, 48231 Warendorf (DE); Brandmeier, Jonas, 33428 Harsewinkel (DE)
(74) Vertreter: CLAAS Gruppe

(57) **Zusammenfassung**

Die vorliegende Erfindung betrifft einen Schüttgutbehälter (3) für eine Erntemaschine (1), umfassend eine in dem Schüttgutbehälter (3) angeordnete Befüllvorrichtung (23) sowie eine an einer oberen Öffnung (21) des Schüttgutbehälters (3) angeordnete Erweiterungsvorrichtung (2) zur Volumenvergrößerung, wobei die Erweiterungsvorrichtung (2) einander gegenüberliegend angeordnet zwei erste Behältererweiterungen (24, 25) umfasst, die quer zur Längsachse des Schüttgutbehälters (3) verlaufend angeordnet sind, und zwei weitere einander gegenüberliegend angeordnet zweite Behältererweiterungen (26, 27), die parallel zur Längsachse des Schüttgutbehälters (3) verlaufend angeordnet sind, wobei die Behältererweiterungen (24, 25, 26, 27) in flachliegenden Verschlusspositionen einen die obere Öffnung (21) zumindest teilweise verschließenden Deckel bilden und in aufgestellten Befüllpositionen das Volumen des Schüttgutbehälters (3) vergrößern, wobei die zwei ersten Behältererweiterungen (24, 25) mittels jeweils einer Strebe (32) mit den beiden zweiten Behältererweiterungen (26, 27) gekoppelt sind, wobei die Streben (32) dazu eingerichtet sind, eine Schwenkbewegung der ersten Behältererweiterungen (24, 25) gleichzeitig und unmittelbar auf die zweiten Behältererweiterungen (26, 27) zu übertragen.

## Beschreibung

Die vorliegende Erfindung betrifft einen Schüttgutbehälter für eine Erntemaschine gemäß dem Oberbegriff des Anspruches 1. Weiterhin betrifft die Erfindung eine selbstfahrende Erntemaschine gemäß dem Oberbegriff des Anspruches 13.

Aus der EP 1 564 157 A1 ist ein Schüttgutbehälter mit einer Vorrichtung zur Erweiterung des Volumens bekannt. Die Vorrichtung weist eine Öffnung auf, mit am oberen Rand der Öffnung schwenkbar angeschlagenen Aufsatzteilen als Behältererweiterungen, die in flachliegenden Verschlusspositionen einen die Öffnung zumindest teilweise verschließenden Deckel bilden und in aufgestellten Befüllpositionen einen vergrößernden trichterförmigen Aufsatz bilden. Die benachbarten Aufsatzteile sind schwenkbar miteinander verbunden. Jedes Aufsatzteil ist durch eine von außenseitig an dem Schüttgutbehälter angeordneten Hydraulikzylindern angetriebene Schwenkvorrichtung aus der flachliegenden Verschlussposition über die Senkrechte hinaus nach außen in die aufgestellte Befüllposition und umgekehrt bewegbar. Um die von den Hydraulikzylindern erzeugte Linearbewegung auf die Aufsatzteile zu übertragen, sind diese durch komplexe Schwenkmechaniken im Inneren des Schüttgutbehälters angebunden. Aufgrund der komplexen Ausgestaltung ist die Vorrichtung zur Erweiterung des Volumens des Schüttgutbehälters verschleißanfällig und kostenintensiv.

Ausgehend vom vorstehend genannten Stand der Technik liegt der Erfindung die Aufgabe zugrunde, einen Schüttgutbehälter der eingangs genannten Art weiterzubilden, der sich durch eine kostengünstige und vereinfachte Ausgestaltung der Schwenkmechanik auszeichnet.

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung ergeben sich aus den nachstehenden Unteransprüchen und der nachfolgenden Beschreibung.

Gemäß dem Anspruch 1 wird ein Schüttgutbehälter für eine Erntemaschine vorgeschlagen, umfassend eine in dem Schüttgutbehälter angeordnete Befüllvorrichtung sowie eine an einer oberen Öffnung des Schüttgutbehälters angeordnete Erweiterungsvorrichtung zur Vergrößerung des Volumens, wobei die Erweiterungsvorrichtung einander gegenüberliegend angeordnet zwei erste Behältererweiterungen umfasst, die quer zur Längsachse des Schüttgutbehälters verlaufend angeordnet sind, und zwei weitere einander gegenüberliegend angeordnet zweite Behältererweiterungen, die parallel zur Längsachse des Schüttgutbehälters verlaufend angeordnet sind, wobei die ersten und zweiten Behältererweiterungen in flachliegenden Verschlusspositionen einen die obere Öffnung zumindest teilweise verschließenden Deckel bilden und in aufgestellten Befüllpositionen das Volumen des Schüttgutbehälters vergrößern. Erfindungsgemäß ist vorgesehen, dass die beiden ersten einander gegenüberliegenden Behältererweiterungen mittels jeweils einer Strebe mit den beiden anderen einander gegenüberliegenden zweiten Behältererweiterungen gekoppelt sind, wobei die Streben dazu eingerichtet sind, eine Schwenkbewegung der beiden ersten Behältererweiterungen gleichzeitig und unmittelbar auf die beiden zweiten Behältererweiterungen zu übertragen.

Durch die gleichzeitige und unmittelbare Übertragung der Schwenkbewegung der ersten Behältererweiterung auf die jeweilige zweite Behältererweiterung wird gegenüber dem eingangs genannten Stand der Technik eine Reduzierung beweglicher und angetriebener Teile erreicht, die zum Überführen der Erweiterungsvorrichtung zwischen den flachliegenden Verschlusspositionen und den aufgestellten Befüllpositionen der ersten Behältererweiterungen und zweiten Behältererweiterungen notwendig ist. Der Schüttgutbehälter respektive die Erweiterungsvorrichtung ist somit kostengünstiger und wegen der geringeren Komponentenanzahl zur Übertragung von Schwenkbewegungen weniger störanfällig. Zudem steht ein größeres Volumen zur Verfügung, da die Anzahl der Komponenten im Inneren des Schüttgutbehälters minimiert ist.

Nachfolgend wird, wenn die ersten Behältererweiterungen und zweiten Behältererweiterungen sich in ihren flachliegenden Verschlusspositionen befinden, von einem geschlossenen Zustand der Erweiterungsvorrichtung gesprochen. Befinden sich die ersten Behältererweiterungen und zweiten Behältererweiterungen in ihren aufgestellten Befüllpositionen, wird von einem geöffneten Zustand der Erweiterungsvorrichtung gesprochen. Jede der ersten Behältererweiterungen und der zweiten Behältererweiterungen ist jeweils um eine horizontal verlaufende Schwenkachse schwenkbar.

Insbesondere kann genau ein Aktor vorgesehen sein, der nur mit zweien der einander gegenüberliegenden ersten oder zweiten Behältererweiterungen gekoppelt ist. Insbesondere kann der Aktor als Linearantrieb ausgeführt sein.

Hierbei kann der Aktor trieblich mit der Befüllvorrichtung verbunden sein, wobei der Aktor dazu eingerichtet ist, die Befüllvorrichtung durch eine im Wesentlichen lineare Bewegung zwischen einer Transportstellung und einer Befüllstellung zu überführen. Befinden sich die ersten und zweiten Behältererweiterungen der Erweiterungsvorrichtung in ihren flachliegenden Verschlusspositionen, befindet sich die Befüllvorrichtung in ihrer Transportstellung, in der die Befüllvorrichtung in Richtung Boden des Schüttgutbehälters eingeschwenkt ist. Befinden sich die ersten und zweiten Behältererweiterungen der Erweiterungsvorrichtung in ihren aufgestellten Befüllpositionen, befindet sich die Befüllvorrichtung in ihrer Befüllstellung, in welcher die Befüllvorrichtung in Richtung der Öffnung des Schüttgutbehälters hochgeschwenkt ist. Hierzu kann der Aktor dazu eingerichtet sein, eine im Wesentlichen in vertikaler Richtung verlaufende Bewegung zum Aufstellen der Befüllvorrichtung zu erzeugen. Bevorzugt kann die Befüllvorrichtung im Fußbereich, d.h. im Bereich des Bodens des Schüttgutbehälters, eine im Wesentlichen horizontal verlaufende Schwenkachse aufweisen.

Insbesondere kann der Aktor durch jeweils zumindest eine Koppelstange mit nur zwei einander gegenüberliegenden Behältererweiterungen gekoppelt sein. Durch den nur einen Aktor wird eine lineare Bewegung nur auf die Befüllvorrichtung und durch die jeweils zumindest eine Koppelstange auf zwei einander gegenüberliegenden Behältererweiterungen übertragen.

Bevorzugt können die Streben, welche zwei nebeneinanderliegende erste und zweite Behältererweiterungen kinematisch miteinander verbinden, starr ausgeführt sein. Die starre Ausführung der Streben führt zu einer verzögerungsfreien Übertragung der Bewegung der Schwenkbewegung der ersten Behältererweiterung auf die jeweilige zweite Behältererweiterung. Insbesondere können die starr ausgeführten Streben dreiecksförmig ausgebildet sein.

Insbesondere können an den Streben beidendig Scharniere angeordnet sein, durch welche die Streben mit den Behältererweiterungen gelenkig verbunden sind. Die Scharniere können als Eingelenkscharniere ausgeführt sein, insbesondere als untrennbare Scharniere.

Des Weiteren können die Scharniere, welche die jeweiligen Streben mit den ersten Behältererweiterungen verbinden, in der Befüllposition der ersten Behältererweiterungen in seitlicher Richtung hinter den ersten Behältererweiterungen angeordnet sein. Mit anderen Worten sind die Scharniere, welche die jeweiligen Streben mit den ersten Behältererweiterungen verbinden, nach innen in Richtung Mitte des Schüttgutbehälters versetzt an den ersten Behältererweiterungen angeordnet. Durch diese Anordnung wird erreicht, dass die Scharniere, welche die jeweiligen Streben mit den ersten Behältererweiterungen verbinden, in ihren Verschlusspositionen nicht über die außenseitigen Oberflächen der ersten Behältererweiterungen hinausragen.

Gemäß einer bevorzugten Weiterbildung können die zweiten Behältererweiterungen jeweils zumindest einen Anschlag aufweisen, der in der geöffneten Stellung des Schüttgutbehälters an den Streben anliegt, sodass die zweiten Behältererweiterungen maximal bis hin zu einer senkrechten Position verschwenkbar sind. Auf diese Weise kann gewährleistet werden, dass die zweiten Behältererweiterungen, auf die nur durch die Streben eine Bewegung übertragen wird, stets in einer Position gehalten werden, welche ein Zurückschwenken der zweiten Behältererweiterungen zum Überführen in ihre Verschlusspositionen ermöglicht, ohne diese mit einem zusätzlichen Aktor oder einem sonstigen Koppelgestänge bewegen zu müssen. Werden die ersten Behältererweiterungen nach innen geschwenkt, um diese in ihre flachliegenden Verschlusspositionen zu überführen, kippen die zweiten Behältererweiterungen mit einsetzender Bewegung unmittelbar nach innen.

Hierfür kann der zumindest eine Anschlag als ein an der jeweiligen zweiten Behältererweiterung angeordnetes stangenförmiges Bauteil ausgeführt sein, welches sich parallel zur jeweiligen zweiten Behältererweiterung erstreckt und über diese endseitig abschnittsweise hinausragt. Das insbesondere starre stangenförmige Bauteil kann durchgehend ausgeführt sein, d.h. sich über die gesamte horizontale Erstreckung der zweiten Behältererweiterung und abschnittsweise darüber hinaus in Richtung der angelenkten Streben erstrecken. Alternativ kann an beiden äußeren Enden der jeweiligen zweiten Behältererweiterung jeweils ein starres stangenförmiges Bauteil angeordnet sein, das sich jeweils abschnittsweise über die jeweilige zweite Behältererweiterung hinaus in Richtung der angelenkten Streben erstreckt.

Insbesondere können die zweiten Behältererweiterungen in der geschlossenen Stellung des Schüttgutbehälters auf an der Innenseite des Schüttgutbehälters angeordneten Auflageelementen aufliegen. Hierdurch wird erreicht, dass die zweiten Behältererweiterungen nicht nach innen durchschwenken. Zudem können die Scharniere entlastet werden. Ein unkontrolliertes Wackeln der zweiten Behältererweiterungen während eines Fahrzustandes kann vermieden werden.

Bevorzugt können die ersten und zweiten Behältererweiterungen starr ausgeführt sein. Dies ist besonders hinsichtlich der Langlebigkeit der Behältererweiterungen vorteilhaft.

Weiterhin können die zweiten Behältererweiterungen im Wesentlichen trapezförmig ausgebildet sein, so dass sich in den aufgestellten Befüllposition der ersten und zweiten Behältererweiterungen unterhalb der Streben und zwischen den ersten und zweiten Behältererweiterungen jeweils ein im Wesentlichen dreieckförmiger Bereich ausbildet, welcher durch ein aus einem flexiblen, faltbaren Material bestehenden Verschlusselement verschlossen ist.

Die eingangs gestellte Aufgabe wird durch eine selbstfahrende Erntemaschine, insbesondere einen selbstfahrenden Mähdrescher, mit einem Schüttgutbehälter, gelöst, wobei der Schüttgutbehälter nach einem der Ansprüche 1 bis 12 ausgeführt ist.

Die vorliegende Erfindung wird nachstehend anhand eines in den Zeichnungen dargestellten Ausführungsbeispieles näher erläutert.

Es zeigen:
- Fig. 1: eine schematische Seitenansicht einer Erntemaschine;
- Fig. 2: eine perspektivische Ansicht eines Schüttgutbehälters der Erntemaschine mit einer Erweiterungsvorrichtung in ihrer Befüllposition; und
- Fig. 3: eine perspektivische Ansicht des Schüttgutbehälters gemäß Fig. 2 in einer Zwischenstellung beim Überführen von der Befüllposition in eine Transportposition.

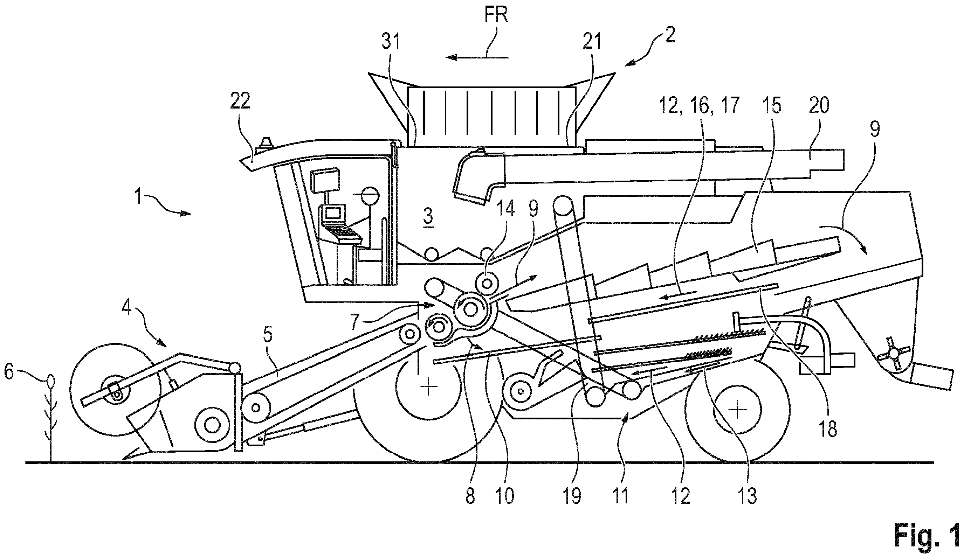

In Fig. 1 ist ein schematischer Längsschnitt durch eine als Mähdrescher ausgeführte Erntemaschine 1 mit einer Erweiterungsvorrichtung 2 zur Vergrößerung des Volumens eines als Korntanks ausgeführten Schüttgutbehälters 3 dargestellt. Die Begriffe Mähdrescher und Erntemaschine werden nachfolgend synonym verwendet. Der Mähdrescher 1 ist frontseitig mit einem Vorsatzgerät 4 wie einem Schneidwerk ausgestattet, das an einem Einzugskanal 5 mit darin angeordnetem Schrägförderer angeordnet ist. Mit dem Vorsatzgerät 4 nimmt der Mähdrescher 1 das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 unterteilt wird. Das Korn-Spreu-Gemisch 8 wird über einen Vorbereitungsboden 10 direkt zu einer Reinigungseinrichtung 11 gefördert, die Körner 12 von den Nichtkornbestandteilen 13, das heißt von Halm- und Spreuteilen trennt.

Hinter dem Dreschwerk 7 ist eine entgegen dem Uhrzeigersinn rotierende Wendetrommel 14 angeordnet, die den aus ausgedroschenen Halmen bestehenden Gutstrom 9 einer als ein Hordenschüttler ausgeführten Abscheideeinrichtung 15 zuführt. Die Abscheideeinrichtung 15 trennt noch im Gutstrom 9 vorhandene Körner 12, Kurzstroh 16 und Spreu 17, die über einen Rücklaufboden 18 ebenfalls in die Reinigungseinrichtung 11 gelangen. Die von der Reinigungseinrichtung 11 abgetrennten Körner 12 werden von einem Kornelevator 19 zu einer in dem Korntank 3 angeordneten Befüllvorrichtung 23 gefördert. Der Korntank 3 weist eine im Wesentlichen rechteckförmige Grundfläche auf und ist üblicherweise hinter einer Fahrerkabine 22 des Mähdreschers 1 angeordnet.

Der Korntank 3 weist eine obere, in einer horizontalen Ebene verlaufende Öffnung 21 auf, oberhalb welcher die Erweiterungsvorrichtung 2 angeordnet ist. Bei Bedarf werden die Körner 12 mit einem Korntankentleervorrichtung 20 aus dem Korntank 3 auf einen Transportwagen (nicht dargestellt) umgeladen. Die auf der Oberseite des Korntanks 3 angeordnete Erweiterungsvorrichtung 2 ist zur Vergrößerung des Volumens des Korntanks 3 in seiner Befüllposition im Wesentlichen trichterförmig aufgestellt. Ein Pfeil FR gibt die Fahrtrichtung des Mähdreschers 1 im Erntebetrieb wieder.

Die Erweiterungsvorrichtung 2 umfasst zwei einander gegenüberliegend angeordnete erste Behältererweiterungen 24, 25, die quer zur Längsachse des Schüttgutbehälters 3 verlaufend angeordnet sind. Die beiden ersten Behältererweiterungen 24, 25 sind um horizontal verlaufende Schwenkachsen schwenkbar. Die beiden ersten Behältererweiterungen 24, 25 sind in ihrer aufgestellten Befüllposition dargestellt. Die eine erste Behältererweiterung 24 ist dabei der Fahrerkabine 22 zugewandt und die andere erste Behältererweiterung 25 ist der Fahrerkabine 22 abgewandt.

Weiterhin umfasst die Erweiterungsvorrichtung 2 zwei weitere einander gegenüberliegend angeordnet zweite Behältererweiterungen 26, 27, die parallel zur Längsachse des Schüttgutbehälters 3 verlaufend angeordnet sind und sich in Längsrichtung des Schüttgutbehälters 3 zwischen den ersten Behältererweiterungen 24, 25 erstrecken. Die zweiten Behältererweiterungen 26, 27 begrenzen die Öffnung 21 seitlich. Die beiden zweiten Behältererweiterungen 26, 27 sind um horizontal verlaufende Schwenkachsen schwenkbar.

Die ersten und zweiten Behältererweiterungen 24, 25, 26, 27 bilden in flachliegenden Verschlusspositionen einen die Öffnung 21 zumindest teilweise verschließenden Deckel und vergrößern in den aufgestellten Befüllpositionen das Volumen des Schüttgutbehälters 3. Hierzu sind die ersten und zweiten Behältererweiterungen 24, 25, 26, 27 an einer umlaufenden Oberkante 31 des Schüttgutbehälters 3 schwenkbar angelenkt.

Die ersten und zweiten Behältererweiterungen 24, 25, 26, 27 sind als im Wesentlichen flächige Bauteile ausgeführt. Die ersten Behältererweiterungen 24, 25 weisen eine im Wesentlichen rechteckförmige Kontur auf. Die zweiten Behältererweiterungen 26, 27 weisen eine im Wesentlichen trapezförmige Kontur auf. Die zweiten Behältererweiterungen 26, 27 sind mit ihrer längeren Grundseite schwenkbar an der Oberkante 31 des Schüttgutbehälters 3 angelenkt.

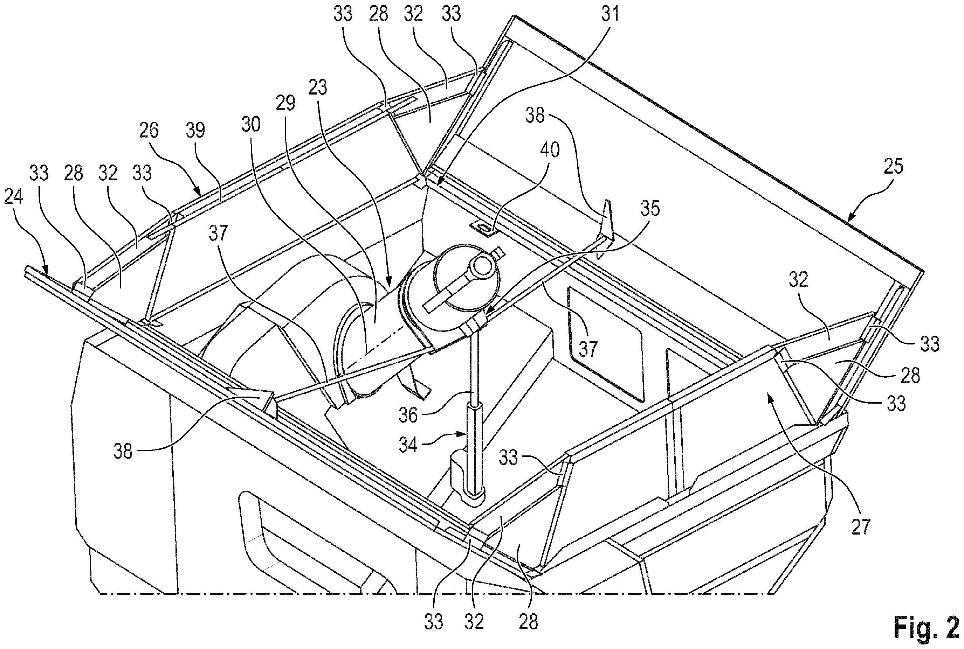

Wie aus Fig. 2 ersichtlich, bilden sich zwischen den benachbarten ersten und zweiten Behältererweiterungen 24, 25, 26, 27 in den aufgestellten Befüllpositionen im Wesentlichen dreieckförmige Bereiche bzw. Zwischenräume aus. Diese Bereiche sind jeweils durch ein aus einem flexiblen, faltbaren Material bestehenden Verschlusselement 28 verschlossen.

Die Befüllvorrichtung 23 umfasst eine - nicht dargestellte Förderschnecke, die von einem rohrförmigen Gehäuse 29 umschlossen ist. Die Befüllvorrichtung 23 ist um eine Schwenkachse 30 in Richtung des Bodens des Schüttgutbehälters 3 schwenkbar. Die Schwenkachse 30 befindet sich im Bereich oberhalb des Bodens des Schüttbehälters 3. In der dargestellten Befüllstellung der Befüllvorrichtung 23 ragt das freie Abgabeende der Befüllvorrichtung 23 über die Oberkante 31 des Schüttgutbehälters 3 hinaus. In der Transportstellung der Befüllvorrichtung 23 ist diese nach innen geschwenkt, so dass die ersten und zweiten Behältererweiterungen 24, 25, 26, 27 in ihren flachliegenden Verschlusspositionen die Öffnung 21 abdecken, ohne mit der Befüllvorrichtung 23 zu kollidieren.

Die zwei ersten einander gegenüberliegenden Behältererweiterungen 24, 25 sind mittels jeweils einer Strebe 32 mit den zwei einander gegenüberliegenden zweiten Behältererweiterungen 26, 27 gekoppelt. Die Streben 32 verlaufen in aufgestellter Befüllposition der ersten und zweiten Behältererweiterungen 24, 25, 26, 27 im Wesentlichen parallel zur Oberkante 31. Die jeweilige Strebe 32 verbindet zueinander benachbarte erste und zweite Behältererweiterungen 24, 25, 26, 27 miteinander. Die Streben 32 sind durch Scharniere 33 an der jeweiligen ersten bzw. zweiten Behältererweiterung 24, 25, 26, 27 angelenkt. Die Anordnung der Scharniere 33 an den zueinander benachbarten ersten und zweiten Behältererweiterungen 24, 25, 26, 27 ist derart, dass beim Überführen von den aufgestellten Befüllpositionen in die Verschlusspositionen die Streben 32 parallel zu den ersten und zweiten Behältererweiterungen 24, 25, 26, 27 verlaufen. Dabei befindet sich die jeweilige Strebe 32 zwischen den jeweiligen benachbarten ersten und zweiten Behältererweiterungen 24, 25, 26, 27, welche die Strebe 32 kinematisch miteinander koppelt. Die Streben 32 sind starr ausgeführt. Vorzugsweise sind die Streben 32 als Profilelemente aus einem Metall oder einem Kunststoff mit hoher Knicksteifigkeit ausgebildet. Insbesondere können die starr ausgeführten Streben 32 auch dreieckförmig ausgebildet sein.

Die Streben 32 sind dazu eingerichtet, eine Schwenkbewegung der ersten Behältererweiterungen 24, 25 gleichzeitig und unmittelbar auf die zweiten Behältererweiterungen 26, 27 zu übertragen.

Die um die Schwenkachse 30 schwenkbare Befüllvorrichtung 23 ist durch einen Aktor 34 betätigbar. Der Aktor 34 ist als Linearantrieb ausgeführt. Insbesondere kann der Aktor 34 als Stellmotor ausgeführt sein. Die Ausführung als Stellmotor respektive als elektromechanischer Linearantrieb hat den Vorteil, dass dieser im Inneren des Schüttbehälters 3 angeordnet werden kann. Der trieblich mit der Befüllvorrichtung 23 verbundene Aktor 34 ist dazu eingerichtet, die Befüllvorrichtung 23 durch eine im Wesentlichen lineare Bewegung zwischen einer Transportstellung und einer Befüllstellung zu überführen. Letztere Befüllstellung ist in Fig. 2 dargestellt.

An der Befüllvorrichtung 23 ist ein Verbindungselement 35 angeordnet, an welchem eine translatorisch bewegte Schubstange 36 des Aktors 34 angreift. An das Verbindungselement 35 ist zudem jeweils zumindest eine Koppelstange 37 mit einem Ende angelenkt, welche mit ihrem gegenüberliegenden Ende an der Innenseite der ersten Behältererweiterungen 24, 25 angelenkt ist. Hierzu können an der Innenseite der beiden ersten Behältererweiterungen 24, 25 Konsolen 38 befestigt sein, an denen die jeweilige Koppelstange 37 mit ihrem anderen Ende angelenkt ist. Die Koppelstangen 37 erstrecken sich in Längsrichtung des Schüttgutbehälters 3. In den aufgestellten Befüllpositionen der beiden ersten Behältererweiterungen 24, 25 erstecken sich Koppelstangen 37 im Wesentlichen senkrecht zur Schubstange 36 des Aktors 34. In den flachliegenden Verschlusspositionen der beiden ersten Behältererweiterungen 24, 25 verlaufen die Koppelstangen 37 unter einem Winkel zur Schubstange 36 geneigt im Wesentlichen V-förmig.

Der genau eine Aktor 34 ist nur mit zweien der einander gegenüberliegenden ersten Behältererweiterungen 24, 25 oder zweiten Behältererweiterungen 26,27 gekoppelt. Hier und vorzugsweise ist der genau eine Aktor 34 nur mit den ersten Behältererweiterungen 24, 25 kinematisch durch die Koppelstangen 37 verbunden.

Um die ersten und zweiten Behältererweiterungen 24, 25, 26, 27 zu betätigen bedarf es nur des einen Aktors 34 und der zumindest zwei Koppelstangen 37, welche den Aktor 34 kinematisch mit den ersten Behältererweiterungen 24, 25 koppeln. Die Betätigung der zweiten Behältererweiterungen 26, 27 erfolgt gleichzeitig und unmittelbar durch das Übertragen der Bewegung der ersten Behältererweiterungen 24, 25 mittels der Streben 32 auf die zweiten Behältererweiterungen 26, 27.

Die zweiten Behältererweiterungen 26, 27 weisen jeweils zumindest einen innenseitig, d.h. dem Inneren des Schüttgutbehälters 3 zugewandt, Anschlag 39 auf. In der geöffneten Stellung des Schüttgutbehälters 3 liegen die Streben 32 an dem zumindest einen Anschlag 39 an. Der jeweilige Anschlag 39 begrenzt die Schwenkbewegung der zweiten Behältererweiterungen 26, 27. Die Anschläge 39 bilden eine Art Widerlager der Scharniere 33, welche die jeweilige Strebe 32 mit den zweiten Behältererweiterungen 26, 27 kinematisch verbindet. Der zumindest eine Anschlag 39 ist hier und vorzugsweise als ein stangenförmiges Bauteil ausgeführt, welches sich parallel zur jeweiligen zweiten Behältererweiterung 26 bzw. 27 erstreckt und über diese endseitig abschnittsweise hinausragt. Das über die jeweilige zweite Behältererweiterung 26 bzw. 27 hinausragende Ende des zumindest einen Anschlags 39 begrenzt die Schwenkbewegung der Streben 32.

Die zweiten Behältererweiterungen 26, 27 sind maximal bis hin zu einer senkrechten Position verschwenkbar. D.h., die zweiten Behältererweiterungen 26, 27 können durch die ersten Behältererweiterungen 24, 25 maximal in eine zur horizontalen Ebene der Öffnung 21 lotrechte Position verschwenkt werden. Bevorzugt können die zweiten Behältererweiterungen 26, 27 lediglich in eine Position verschwenkbar sein, in der diese ein geringfügige, nach innen gerichtete Neigung aufweisen. Auf diese Weise kann gewährleistet werden, dass die zweiten Behältererweiterungen 26, 27, auf die nur durch die Streben 32 eine Bewegung übertragen wird, stets in einer Position gehalten werden, welche ein Zurückschwenken der zweiten Behältererweiterungen 26, 27 zum Überführen in ihre flachliegenden Verschlusspositionen ermöglicht, ohne diese mit einem zusätzlichen Aktor oder einem sonstigen Koppelgestänge bewegen zu müssen. Vorzugsweise wird das Zurückschwenken durch das Eigengewicht der zweiten Behältererweiterungen 26, 27 bewirkt. Werden die ersten Behältererweiterungen 24, 25 durch das Bestätigen des Aktors 34 von den Koppelstangen 37 nach innen geschwenkt, um diese in ihre flachliegenden Verschlusspositionen zu überführen, kippen die zweiten Behältererweiterungen 26, 27 spätestens mit einsetzender Bewegung der beiden ersten Behältererweiterungen 24, 25 unmittelbar nach innen.

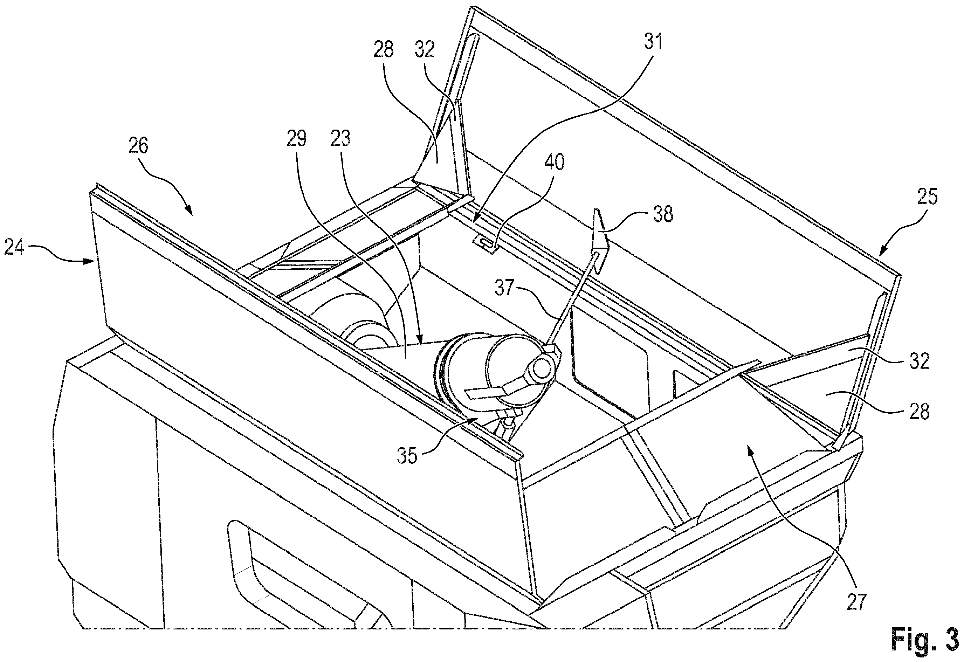

Die Darstellung in Fig. 3 zeigt eine perspektivische Ansicht des Schüttgutbehälters 3 gemäß Fig. 2 in einer Zwischenstellung beim Überführen von der Befüllposition in eine Transportposition. In der Transportposition befinden sich die ersten und zweiten Behältererweiterungen 24, 25, 26, 27 in ihren flachliegenden Verschlusspositionen und bilden dadurch einen die obere Öffnung 21 zumindest teilweise verschließenden Deckel. Dies dient der Einhaltung der zulässigen Fahrzeughöhe bei Straßenfahrt mit der Erntemaschine 1.

In der geschlossenen Stellung des Schüttgutbehälters 3 liegen die in der Verschlussposition befindlichen zweiten Behältererweiterungen 26, 27 auf an der Innenseite des Schüttgutbehälters 3 angeordneten Auflageelementen 40 auf. In den Darstellungen gemäß den Fig. 2 und 3 ist lediglich eines der Auflageelemente 40 sichtbar. Die Auflageelemente 40 sind unterhalb der Oberkante 31 angeordnet. Die Auflageelemente 40 erstrecken sich in im Wesentlichen horizontaler Richtung ins Innere des Schüttgutbehälters 3. Zum Abstützen der jeweiligen zweiten Behältererweiterung 26, 27 sind jeweils zwei Auflageelemente 40 einander gegenüberliegend an der Innenseite des Schüttgutbehälters 3 angeordnet. Hierdurch wird erreicht, dass die zweiten Behältererweiterungen 26, 27, die in der geschlossenen Stellung des Schüttgutbehälters 3 unterhalb der beiden ersten Behältererweiterung 24, 25 liegen, nicht nach innen durchschwenken. Zudem können dadurch die Scharniere 33 entlastet werden. Ein unkontrolliertes Wackeln der zweiten Behältererweiterungen 26, 27 während eines Fahrzustandes kann vermieden werden.

Beim Öffnen der Erweiterungsvorrichtung 2 wird der Aktor 34 angesteuert, um die Schubstange 36 auszufahren. Mit dem Ausfahren der Schubstange 36 wird die Befüllvorrichtung 23 um ihre Schwenkachse 30 in Richtung der noch durch die Behältererweiterungen 24, 25, 26, 27 abgedeckte Öffnung 21 des Schüttgutbehälters 3 bewegt. Die Bewegung der Befüllvorrichtung 23 wird auf die zumindest zwei Koppelstangen 37 übertragen, was zum Ausschwenken der ersten Behältererweiterungen 24, 25 führt. Durch die Streben 32 wird die Schwenkbewegung der beiden ersten Behältererweiterungen 24, 25 gleichzeitig und unmittelbar auf die zweiten Behältererweiterungen 26, 27 übertragen.

### Bezugszeichenliste

| | | | |
|---|---|---|---|
| 1 | Erntemaschine/Mähdrescher | 34 | Aktor |
| 2 | Erweiterungsvorrichtung | 35 | Verbindungselement |
| 3 | Schüttgutbehälter/Korntank | 36 | Schubstange |
| 4 | Vorsatzgerät | 37 | Koppelstange |
| 5 | Einzugskanal | 38 | Konsole |
| 6 | Erntegut | 39 | Anschlag |
| 7 | Dreschwerk | 40 | Auflageelement |
| 8 | Korn-Spreu-Gemisch | | |
| 9 | Gutstrom | | |
| 10 | Vorbereitungsboden | | |
| 11 | Reinigungseinrichtung | | |
| 12 | Korn | | |
| 13 | Nichtkornbestandteile | | |
| 14 | Wendetrommel | | |
| 15 | Abscheideeinrichtung | | |
| 16 | Kurzstroh | | |
| 17 | Spreu | | |
| 18 | Rücklaufboden | | |
| 19 | Kornelevator | | |
| 20 | Korntankentleervorrichtung | | |
| 21 | Öffnung | | |
| 22 | Fahrerkabine | | |
| 23 | Befüllvorrichtung | | |
| 24 | Erste Behältererweiterung | | |
| 25 | Erste Behältererweiterung | | |
| 26 | Zweite Behältererweiterung | | |
| 27 | Zweite Behältererweiterung | | |
| 28 | Verschlusselement | | |
| 29 | Gehäuse | | |
| 30 | Schwenkachse | | |
| 31 | Oberkante | | |
| 32 | Strebe | | |
| 33 | Scharnier | | |

## Patentansprüche

1. Schüttgutbehälter (3) für eine Erntemaschine (1), umfassend eine in dem Schüttgutbehälter (3) angeordnete Befüllvorrichtung (23) sowie eine an einer oberen Öffnung (21) des Schüttgutbehälters (3) angeordnete Erweiterungsvorrichtung (2) zur Volumenvergrößerung, wobei die Erweiterungsvorrichtung (2) einander gegenüberliegend angeordnet zwei erste Behältererweiterungen (24, 25) umfasst, die quer zur Längsachse des Schüttgutbehälters (3) verlaufend angeordnet sind, und zwei weitere einander gegenüberliegend angeordnet zweite Behältererweiterungen (26, 27), die parallel zur Längsachse des Schüttgutbehälters (3) verlaufend angeordnet sind, wobei die ersten und zweiten Behältererweiterungen (24, 25, 26, 27) in flachliegenden Verschlusspositionen einen die obere Öffnung (21) zumindest teilweise verschließenden Deckel bilden und in aufgestellten Befüllpositionen das Volumen des Schüttgutbehälters (3) vergrößern, **dadurch gekennzeichnet, dass** die beiden ersten Behältererweiterungen (24, 25) mittels jeweils einer Strebe (32) mit beiden zweiten Behältererweiterungen (26, 27) gekoppelt sind, wobei die Streben (32) dazu eingerichtet sind, eine Schwenkbewegung der beiden ersten Behältererweiterungen (24, 25) gleichzeitig und unmittelbar auf die beiden zweiten Behältererweiterungen (26, 27) zu übertragen.

2. Schüttgutbehälter (3) nach Anspruch 1, **dadurch gekennzeichnet, dass** genau ein Aktor (34) vorgesehen ist, der nur mit zweien der einander gegenüberliegenden ersten Behältererweiterungen (24, 25) oder zweiten Behältererweiterungen (26, 27) gekoppelt ist.

3. Schüttgutbehälter (3) nach Anspruch 2, **dadurch gekennzeichnet, dass** der Aktor (34) trieblich mit der Befüllvorrichtung (23) verbunden ist, wobei der Aktor (34) dazu eingerichtet ist, die Befüllvorrichtung (23) durch eine im Wesentlichen lineare Bewegung zwischen einer Transportstellung und einer Befüllstellung zu überführen.

4. Schüttgutbehälter (3) nach Anspruch 2 oder 3, **dadurch gekennzeichnet, dass** der Aktor (34) durch jeweils zumindest eine Koppelstange (37) mit nur zwei einander gegenüberliegenden Behältererweiterungen (24, 25; 26, 27) gekoppelt ist.

5. Schüttgutbehälter (3) nach einem der Ansprüche 1 bis 4, **dadurch gekennzeichnet, dass** die Streben (32), welche zwei nebeneinanderliegende erste und zweite Behältererweiterungen (24, 25, 26, 27) kinematisch miteinander verbinden, starr ausgeführt sind.

6. Schüttgutbehälter (3) nach einem der Ansprüche 1 bis 5, **dadurch gekennzeichnet, dass** an den Streben (32) beidendig Scharniere (33) angeordnet sind, durch welche die Streben (32) mit den Behältererweiterungen (24, 25, 26, 27) gelenkig verbunden sind.

7. Schüttgutbehälter (3) nach Anspruch 6, **dadurch gekennzeichnet, dass** die Scharniere (33), welche die Streben (32) mit den jeweiligen ersten Behältererweiterungen (24, 25) verbinden, in der Befüllposition der ersten Behältererweiterungen (24, 25) in seitlicher Richtung hinter den ersten Behältererweiterungen (24, 25) angeordnet sind.

8. Schüttgutbehälter (3) nach einem der Ansprüche 1 bis 7, **dadurch gekennzeichnet, dass** die zweiten Behältererweiterungen (26, 27) zumindest einen Anschlag (39) aufweisen, der in der geöffneten Stellung des Schüttgutbehälters (3) an den Streben (32) anliegt, sodass die zweiten Behältererweiterungen (26, 27) maximal bis hin zu einer senkrechten Position verschwenkbar sind.

9. Schüttgutbehälter (3) nach Anspruch 8, **dadurch gekennzeichnet, dass** der zumindest eine Anschlag (39) als ein stangenförmiges Bauteil ausgeführt ist, welches sich parallel zur jeweiligen zweiten Behältererweiterung (26, 27) erstreckt und über diese endseitig abschnittsweise hinausragt.

10. Schüttgutbehälter (3) nach einem der Ansprüche 1 bis 9, **dadurch gekennzeichnet, dass** die zweiten Behältererweiterungen (26, 27) in der geschlossenen Stellung des Schüttgutbehälters (3) auf an der Innenseite des Schüttgutbehälters (3) angeordneten Auflageelementen (40) aufliegen.

11. Schüttgutbehälter (3) nach einem der Ansprüche 1 bis 10, **dadurch gekennzeichnet, dass** die ersten und zweiten Behältererweiterungen (24, 25, 26, 27) starr ausgeführt sind.

12. Schüttgutbehälter (3) nach einem der Ansprüche 1 bis 11, **dadurch gekennzeichnet, dass** die zweiten Behältererweiterungen (26, 27) im Wesentlichen trapezförmig ausgebildet sind, so dass sich in Befüllposition der ersten und zweiten Behältererweiterungen (24, 25, 26, 27) unterhalb der Streben (32) und zwischen den ersten und zweiten Behältererweiterungen (24, 25, 26, 27) jeweils ein im Wesentlichen dreieckförmiger Bereich ausbildet, welcher durch ein aus einem flexiblen, faltbaren Material bestehenden Verschlusselement (28) verschlossen ist.

13. Selbstfahrende Erntemaschine (1), insbesondere Mähdrescher, mit einem Schüttgutbehälter (3), **dadurch gekennzeichnet, dass** der Schüttgutbehälter (3) nach einem der Ansprüche 1 bis 12 ausgeführt ist.
